(19) Europäisches Patentamt
European Patent Office
Office européen des brevets

(11) **EP 1 559 003 B1**

(12) **FASCICULE DE BREVET EUROPEEN**

(45) Date de publication et mention
de la délivrance du brevet:
**27.03.2019 Bulletin 2019/13**

(21) Numéro de dépôt: **03767872.9**

(22) Date de dépôt: **31.10.2003**

(51) Int Cl.:
***G06F 9/445*** *(2018.01)*    ***G06Q 20/34*** *(2012.01)*
***G07F 7/10*** *(2006.01)*

(86) Numéro de dépôt international:
**PCT/FR2003/003257**

(87) Numéro de publication internationale:
**WO 2004/042572 (21.05.2004 Gazette 2004/21)**

(54) **CARTE A MICROCIRCUIT COMPORTANT DES MOYENS DE PUBLICATION DE SES OBJETS INFORMATIQUES**

MIKROSCHALTUNGSKARTE MIT MITTELN ZUM VERÖFFENTLICHEN IHRER COMPUTEROBJEKTE

MICROCIRCUIT CARD COMPRISING MEANS FOR PUBLISHING ITS COMPUTER OBJECTS

(84) Etats contractants désignés:
**AT BE BG CH CY CZ DE DK EE ES FI FR GB GR HU IE IT LI LU MC NL PT RO SE SI SK TR**

(30) Priorité: **04.11.2002 FR 0213750**

(43) Date de publication de la demande:
**03.08.2005 Bulletin 2005/31**

(73) Titulaire: **IDEMIA France**
**92400 Courbevoie (FR)**

(72) Inventeurs:
• **FLATTIN, David**
**F-92150 Suresnes (FR)**
• **LOUIS, Christophe**
**F-914190 Gif sur Yvette (FR)**
• **CONTRERAS TORRES, Javier**
**28002 Madrid (ES)**

(74) Mandataire: **Santarelli**
**49, avenue des Champs-Elysées**
**75008 Paris (FR)**

(56) Documents cités:
EP-A- 0 753 816     EP-A- 0 964 370
WO-A1-98/32073     US-A1- 2002 082 847

• VANDEWALLE, JEAN-JACQUES: "Developing and deploying Java Card Applications" GEMPLUS SOFTWARE RESEARCH LABS, [Online] 2001, pages 1-23, XP002317561 Extrait de l'Internet: URL:http://rangiroa.essi.fr/cours/car/02-j avacard-jini.pdf> [extrait le 2005-02-14]
• MACAIRE, ALAIN: "Service Registry For Open Smart Cards" GEMPLUS DEVELOPER CONFERENCE 2000, [Online] 20 juin 2000 (2000-06-20), pages 1-9, XP002317562 MONTPELLIER, FRANCE Extrait de l'Internet: URL:http://www.gemplus.com/smart/rd/public ations/pdf/Mac00gdc.pdf> [extrait le 2005-02-14]
• DAVE A ET AL: "PROXIES, APPLICATION INTERFACES, AND DISTRIBUTED SYSTEMS" PROCEEDINGS OF THE INTERNATIONAL WORKSHOP ON OBJECT ORIENTATION IN OPERATING SYSTEMS, XX, XX, janvier 1992 (1992-01), pages 212-220, XP002004311
• MACAIRE A: "An open and secure terminal infrastructure for hosting personal services" PROCEEDINGS OF THE TECHNOLOGY OF OBJECT-ORIENTED LANGUAGES AND SYSTEMS, 5 juin 2000 (2000-06-05), pages 10-21, XP010500927
• JEAN-JACQUES VANDEWALLE: "New RMI Extension to the Java Card? 2.1 API" JAVA ONE CONFERENCE, [Online] juin 2001 (2001-06), pages 1-12, XP002317392 SAN FRANCISCO Extrait de l'Internet: URL:http://www.gemplus.com/smart/rd/public ations/pdf/Van01rmi.pdf> [extrait le 2005-02-10]

• JEAN-JACQUES VANDEWALLE: "Construction d?applications avec la carte à puce"[Online] 23 août 1999 (1999-08-23), pages 1-76, XP002317391 Extrait de l'Internet: URL:http://sardes.inrialpes.fr/ecole/1999/cours/99-13.pdf> [extrait le 2005-02-10]

**EP 1 559 003 B1**

**Description**

La présente invention concerne une carte à microcircuit du type de celles pouvant être insérées dans un système informatique, la carte comportant un système hôte de traitement de données (processeur, mémoires,...) et au moins un objet informatique (programme logicielle, variable, fichier,...) utilisé par ce système hôte.

Dans la suite de ce document on conviendra d'appeler :

- "terminal", le système informatique comportant un lecteur de carte à microcircuit dans lequel la carte est insérée. Le terminal peut par exemple être un ordinateur personnel (PC), un appareil de télécommunications (téléphone, assistant personnel,...) ou un système de traitement de données numériques conçu pour effectuer un traitement particulier, par exemple des traitements cryptographiques ;
- "système tiers", un système informatique relié au terminal tel que défini ci-dessus par un réseau de télécommunications (réseau local, réseau Internet ou autre).

De façon connue, la norme Java Card 2.2 définit un langage à objets permettant de simplifier le développement d'applications logicielles s'exécutant sur une carte à microcircuit. Le système hôte de la carte à microcircuit comporte traditionnellement un système d'exploitation (OS, "Operating System" en anglais) gravé dans une mémoire morte (ROM) de la carte, ce système d'exploitation comportant une machine virtuelle Java Card (JVM).

Selon cette norme, la communication entre le système hôte de la carte et le terminal s'effectue au moyen d'un protocole de communication standard rudimentaire.

Plus précisément, les informations échangées entre le système hôte et le terminal sont codées en hexadécimal et placées dans un tableau d'octets qui constitue soit un message de commande du terminal vers la carte, soit un message de réponse de la carte vers le terminal. Un tel message de commande ou de réponse est appelé APDU ("Application Protocol Data Unit" en anglais).

Malheureusement, la norme Java Card 2.2 ne permet pas de publier la liste des objets informatiques accessibles sur la carte.

Cette contrainte rend très difficile le développement d'applications logicielles s'exécutant sur un système terminal ou un système tiers. En effet, le développement d'applications logicielles s'exécutant sur un tel système nécessite le codage fastidieux des APDU, et en particulier la connaissance des codes hexadécimaux pour adresser les objets de la carte. Un exemple d'application logicielle conforme au standard Java Card 2.2 est donné à titre d'exemple à l'annexe A.

De même, il est connu du document EP 0 964 370 un mécanisme de chargement d'instructions et d'informations de lien dans une carte à microcircuit. Les informations de lien sont fournies à la carte à microcircuit de manière entrelacée avec les instructions. Un programme d'édition de lien est exécuté pendant le chargement afin de remplacer des références logiques des instructions par des références locales et relatives dans la carte à microcircuit. Pour ce faire, une table d'allocation interne à la carte à puce permet d'indiquer à des instructions l'adresse de renvoi de cette instruction.

Toutefois, ce mécanisme ne permet pas une manipulation aisée des objets de la carte par une application s'exécutant sur un système terminal ou un système tiers.

La présente invention vise à résoudre les problèmes précités. Plus précisément, et selon un premier aspect, l'invention vise une carte à microcircuit comportant au moins un objet informatique, la carte étant caractérisée en ce qu'elle comporte :

- un registre comportant un identifiant logique dudit objet informatique et au moins une première référence dudit objet informatique locale à ladite carte; et
- des moyens adaptés à communiquer à un terminal, sur réception d'un premier message provenant du terminal comportant ledit identifiant logique, au moins une deuxième référence locale dudit objet informatique obtenue à partir de ladite au moins une première référence locale dudit objet informatique, ladite deuxième référence locale dudit objet informatique étant temporaire et étant obtenue par cryptage de la première référence locale dudit objet informatique en utilisant une clef de cryptage de la carte à microcircuit.

Corrélativement, et selon un deuxième aspect, l'invention vise un équipement informatique de type terminal comportant des moyens adaptés à mettre en oeuvre une application logicielle comportant au moins une première instruction pour utiliser au moins un objet informatique dans une carte à microcircuit, la première instruction utilisant un identifiant logique de cet objet. Le terminal est caractérisé en ce qu'il comporte des moyens d'obtention, à partir dudit identifiant logique, d'au moins une deuxième référence locale dudit objet informatique par envoi d'un message comportant ledit identifiant logique à ladite carte, ladite au moins deuxième référence locale étant obtenue par la carte à microcircuit à partir d'une première référence dudit objet informatique locale à ladite carte, ladite première référence locale et ledit identifiant logique étant dans un registre de ladite carte, ladite deuxième référence locale dudit objet informatique étant temporaire et étant obtenue par cryptage de la première référence locale dudit objet informatique en utilisant une clef

3

de cryptage de la carte à microcircuit; des moyens de traduction de ladite au moins une première instruction en au moins une deuxième instruction pouvant être exécutée sur ladite carte, ladite au moins une deuxième instruction utilisant ladite au moins une deuxième référence locale dudit objet informatique; et des moyens de communication adaptés à communiquer ladite au moins une deuxième instruction à ladite carte en vue de ladite utilisation.

Ainsi, une application logicielle s'exécutant sur le terminal peut comporter des instructions pour exécuter un objet informatique de la carte, ces instructions utilisant un identifiant logique de cet objet au lieu de la référence locale à la carte.

D'autre part, cette application logicielle peut comporter des instructions de haut niveau pour l'échange d'informations entre le terminal et le système hôte de la carte, ces instructions de haut niveau étant traduites, par les moyens de traduction précités en messages APDU.

La présente invention facilite ainsi le développement d'applications logicielles s'exécutant sur le terminal, le développeur n'ayant ni à connaître les codes hexadécimaux pour adresser les objets de la carte à microcircuit, ni à coder les commandes APDU.

Il est décrit dans les présentations intitulées « Developing and deploying Java Card applications» de J.J. Vandewalle et «Service Registry for Open Smart Cards» de A. Macaire, des mécanismes tels que Java Card, JINI et JNDI qui permettent l'appel d'objets dans une carte à puce.

L'objet informatique de la carte à microcircuit peut notamment être un programme informatique, une variable ou un fichier informatique.

Selon une caractéristique avantageuse, la carte à microcircuit comporte en outre des moyens de publication de l'identifiant logique et de la première référence locale dans le registre de la carte.

Dans un premier mode de réalisation, le registre de la carte est créé une fois pour toutes, c'est à dire de façon statique au moment de la création de la carte à microcircuit.

En revanche, dans un mode préféré de réalisation conforme à la présente invention, les moyens de publication permettent la publication dynamique de l'identifiant logique et de la première référence locale de l'objet informatique dans le registre de la carte. Ainsi, seuls les objets informatiques nécessaires à un moment donné sont accessibles aux applications logicielles s'exécutant sur le terminal.

Dans un mode préféré de réalisation, l'objet informatique est un objet de type Java Card appartenant à une applet Java Card, et la deuxième référence locale de l'objet informatique est conforme à la norme Java Card 2.2. Dans ce mode préféré de réalisation, les moyens d'obtention de l'équipement informatique terminal sont adaptés à obtenir de la carte à microcircuit cette deuxième référence locale conforme à la norme Java Card 2.2.

Préférentiellement, la publication est effectuée à l'initialisation de cette applet.

Ce mode préféré de réalisation laisse au développeur de l'applet Java s'exécutant sur le système hôte de la carte à microcircuit, la possibilité de rendre chaque objet informatique de cette applet, accessible ou non aux applications logicielles s'exécutant sur le terminal.

Dans une variante de ce mode préféré de réalisation, les moyens de communication sont adaptés à communiquer un identifiant de l'applet sur réception du premier message.

On obtient ainsi dans cette variante l'identifiant de l'applet sans que le programmeur n'ait besoin de connaître son code hexadécimal. Conformément à la norme Java Card 2.2, cet identifiant est nécessaire pour pouvoir utiliser ultérieurement, les objets informatiques de cette applet.

Dans une autre variante préférée de réalisation de la carte à microcircuit selon l'invention, les moyens de communication de la carte communiquent, sur réception d'un deuxième message, l'ensemble des identifiants logiques compris dans le registre de la carte.

Cette variante est particulièrement avantageuse car elle permet au système terminal de connaître tous les objets informatiques publiés par la carte à microcircuit et les différentes versions de ces objets.

Dans une première variante de réalisation, la deuxième référence locale communiqué par les moyens de communication de la carte à microcircuit est la première référence locale de l'objet informatique proprement dite.

Dans une variante préférée de réalisation, cette deuxième référence locale est temporaire et est obtenue par cryptage de la première référence locale en utilisant une clef de cryptage de la carte à microcircuit.

Ainsi, la deuxième référence locale ne peut être utilisée que pour une session définie par la sélection de l'applet. Cette variante préférée de réalisation permet d'augmenter la sécurité de la carte, conformément aux recommandations de la norme Java Card 2.2, afin de se prémunir de attaques par "rejeux", c'est à dire des attaques visant à utiliser frauduleusement l'objet de la carte, en réutilisant sa référence, sans sélectionner l'applet implémentant cet objet.

Dans un mode préféré de réalisation, le terminal comporte en outre des moyens de publication dans un de ses registres d'un objet tampon comportant une interface identique à celle de l'objet informatique de la carte, cet objet tampon étant adapté à traduire une instruction s'exécutant sur un système tiers et utilisant l'identifiant logique, en au moins une deuxième instruction pouvant être exécutée sur la carte et utilisant la deuxième référence locale.

Ce mode préféré de réalisation permet l'utilisation des objets informatiques de la carte à microcircuit par une application logicielle s'exécutant sur un système tiers en réseau avec le terminal de la carte.

Préférentiellement, ce registre est conforme au standard "Java2 SE RMI Registry".

Dans une variante préférée de ce mode de réalisation, les moyens de publication obtiennent et publient dans ce registre du système terminal l'ensemble des objets tampons des objets informatiques publiés par ladite carte.

Cette variante est particulièrement avantageuse car elle permet au système tiers de connaître tous les objets informatiques publiés par la carte à microcircuit et les différentes versions de ces objets.

L'invention sera mieux comprise et d'autres avantages apparaîtront plus clairement à la lumière de la description qui va suivre d'une carte à microcircuit et d'un système informatique terminal conformes à son principe, cette description étant donnée uniquement à titre d'exemple et faite en référence aux dessins annexés dans lesquels :

- la figure 1 est un schéma bloc d'une carte à microcircuit conforme à la présente invention, dans un mode particulier de réalisation ; et
- la figure 2 est un schéma bloc d'un système informatique terminal conforme à l'invention dans un mode préféré de réalisation.

Par ailleurs la description est accompagnée des annexes suivantes :

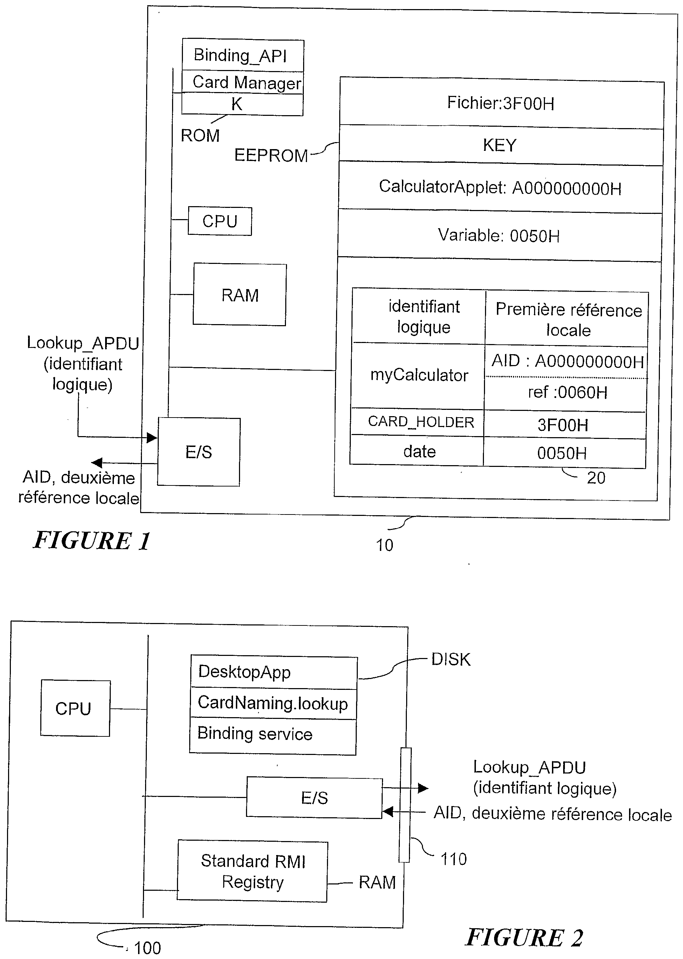

- annexe A : code source d'une applet Java Card de la carte à microcircuit de la figure 1 ;
- annexe B : première partie du code source d'un code client du système informatique terminal de la figure 2;
- annexe C : tableau de syntaxe d'une commande APDU pour obtenir l'identificateur d'une applet;
- annexe D : tableau de syntaxe d'une commande APDU pour obtenir la référence d'un objet;
- annexe E : tableau de syntaxe d'une commande APDU d'affectation d'une valeur à un objet informatique conformément à la norme ISO7816 ;
- annexe F : deuxième partie du code source d'un code client du système informatique terminal de la figure 2;
- annexe G : tableau de syntaxe d'une commande APDU pour exécuter un programme à distance sur une carte à microcircuit; et
- annexe H : : tableau de syntaxe d'une commande APDU pour obtenir les identifiants logiques de tous les objets d'une carte à microcircuit.

La **figure 1** représente une carte à microcircuit 10 conforme à la présente invention. Cette carte 10 comporte un système hôte de traitement de données comportant un processeur CPU, associé de façon classique à une mémoire morte ROM, une mémoire volatile RAM, et une mémoire non volatile réinscriptible EEPROM.

La mémoire morte ROM comporte un système d'exploitation OS, ce système d'exploitation OS comportant une machine virtuelle Java Card JVM.

La carte à microcircuit 10 comporte des moyens d'entrée-sortie E/S adaptés à émettre des données numériques à destination d'un terminal et à recevoir des données numériques en provenance de ce terminal.

Ces moyens d'entrée-sortie E/S sont par exemple constitués par un port série connu de l'homme du métier.

La carte à microcircuit 10 décrite ici comporte trois objets informatiques.

De façon connue de l'homme du métier, un objet conforme à la norme Java Card est un cas particulier de programme informatique. Par souci de simplification, on conviendra dans la suite de ce document qu'un objet peut être vu comme un programme informatique.

La carte à microcircuit 10 comporte ainsi un premier objet informatique, à savoir un programme informatique appartenant à une applet Java Card CalculatorApplet dont le code, donné à l'annexe A, est mémorisé dans une mémoire réinscriptible EEPPROM.

Cet objet informatique comporte une première référence 0060H locale à la carte 10 conforme à la norme Java Card. Selon l'art antérieur, le programmeur d'une application logicielle s'exécutant sur le terminal doit utiliser cette référence 0060H pour exécuter ce programme sur la carte.

Conformément à la présente invention, ce programme informatique comporte également un identifiant logique "myCalculator" pouvant être utilisé par un programmeur du système informatique terminal à la place de la référence 0060H.

La carte à microcircuit 10 comporte un deuxième objet informatique, à savoir un fichier mémorisé dans la mémoire non volatile réinscriptible EEPROM.

On notera tout d'abord, que le mot "fichier" doit, dans ce document, être compris au sens large, ce mot désignant aussi bien un fichier qu'un répertoire. Notamment, le mot fichier désignera en particulier un répertoire DF (Dedicated file) et un fichier EF (Elementary File) au sens de la norme ISO7816.

De façon connue de l'homme du métier des cartes à microcircuit, le fichier comporte, conformément à la norme ISO7816, une première référence locale à la carte appelée FID (File Identifier) codée sur deux octets en hexadécimal, soit dans l'exemple décrit ici "3F00H".

Conformément à la présente invention, ce fichier comporte un identifiant logique "CARD_HOLDER".

La carte à microcircuit 10 comporte un troisième objet informatique, à savoir une variable (ou "data objet") dans un registre de la mémoire réinscriptible EEPROM.

Cette variable comporte une première référence locale à la carte codée sur deux octets en hexadécimal, soit dans l'exemple décrit ici "0050H". On supposera que cette variable sert à mémoriser une date.

Conformément à la présente invention, cette variable comporte un identifiant logique, ici la chaîne de caractères "date".

Conformément à la présente invention, la carte à microcircuit comporte un fichier 20 mémorisant une table comportant une ligne pour chaque objet informatique accessible par une application logicielle s'exécutant sur un système informatique terminal ou sur un système informatique tiers.

Chacune des lignes de la table du fichier 20 comporte :

- un enregistrement comportant l'identifiant logique de l'objet informatique ; et
- un enregistrement comportant une première référence de cet objet locale à la carte.

La carte à microcircuit 10 comporte une application CardManager mémorisée par exemple en mémoire ROM.

De façon connue, l'application CardManager est adaptée, en utilisant les moyens d'entrée-sortie E/S, à échanger des messages constitués de commandes et de réponses APDU avec le système informatique terminal dans lequel la carte à microcircuit est insérée.

Elle est en particulier adaptée à recevoir un message Lookup_APDU en provenance du terminal précité, ce message comportant l'identifiant logique d'un objet informatique.

Cette application CardManager est également adaptée à communiquer au terminal, en utilisant le fichier 20, une deuxième référence locale de l'objet informatique, sur réception du message Lookup_APDU.

Plus précisément, l'application CardManager extrait l'identifiant logique contenu dans le message APDU, recherche dans le fichier 20 la ligne comportant cet identifiant logique dans sa deuxième colonne et obtient la première référence locale contenue dans la deuxième colonne de cette même ligne.

Dans un mode de réalisation décrit ici, la première référence locale ainsi obtenue est ensuite cryptée avec une fonction K qui utilise une clef de cryptage KEY mémorisée en mémoire réinscriptible EEPROM, ce qui permet ainsi d'obtenir une deuxième référence locale communiquée au terminal par l'application CardManager.

En variante, la deuxième référence locale communiquée au terminal est la première référence locale elle-même.

Dans le mode de réalisation préféré, les moyens de communication sont adaptés à communiquer, sur réception d'un message comportant l'identifiant logique d'un objet informatique conforme à la norme Java Card 2.2, l'identifiant AID de l'applet Java Card CalculatorApplet comportant cet objet informatique, soit par exemple la référence A000000000H.

Ainsi, sur réception d'un message comportant l'identifiant logique "myCalculator", les moyens de communication communiquent d'une part l'identificateur AID A000000000H de l'applet Java CalculatorApplet et d'autre part la deuxième référence locale K(0060H)= 0460h obtenue par cryptage, avec la clef KEY, de la référence locale 0060H.

L'application CardManager fournit également le nom Calculator de l'interface de l'objet informatique.

Par ailleurs :

- sur réception d'un message comportant l'identifiant logique "CARD_HOLDER", les moyens de communication communiquent la deuxième référence locale K(0004H) ; et
- sur réception d'un message comportant l'identifiant logique "date", les moyens de communication communiquent la deuxième référence locale K(0050H).

Dans un premier mode de réalisation, le fichier 20 est construit de façon statique, au moment de la création de la carte. Il s'agit par exemple d'un tableau mémorisé dans la mémoire morte ROM.

Dans le mode préféré de réalisation décrit ici, le fichier 20 est mis à jour de façon dynamique. A cette fin, la carte à microcircuit 10 comporte des moyens de publication de l'identifiant logique et de la première référence locale dans le fichier 20 de la carte.

Ces moyens de publication sont constitués ici par un programme informatique Binding_API mémorisé en mémoire ROM, ce programme informatique Binding_API comportant une instruction informatique bind, dont un exemple d'utilisation pour la publication du programme "myCalculator" est donné à la ligne A33 de l'annexe A.

Préférentiellement et tel que décrit ici en référence à l'annexe A, cette publication s'effectue à l'initialisation de l'applet Java CalculatorApplet.

Nous allons maintenant décrire en référence à la **figure 2**, un équipement informatique 100 de type terminal conforme à la présente invention.

Dans l'exemple décrit ici, le terminal 100 est constitué par un ordinateur personnel PC, comportant des moyens 110 d'insertion d'une carte à microcircuit 10 telle que décrite précédemment en référence à la figure 1.

Ce terminal 100 comporte notamment des moyens connus pour la mise en oeuvre d'une application logicielle, à savoir un processeur CPU associé à des mémoires ROM et RAM et un disque dur DISK.

Le terminal 100 comporte également des moyens d'entrée-sortie E/S, adaptés à émettre des données numériques à destination d'une carte à microcircuit conforme à l'invention, et à recevoir des données d'une telle carte.

Ces moyens d'entrée-sortie E/S sont par exemple constitués par un port série connu de l'homme du métier.

Conformément à la présente invention, le terminal 100 peut mettre en oeuvre une application logicielle DesktopApp mémorisée dans le disque dur DISK comportant au moins une première instruction pour utiliser un objet informatique dans une carte à microcircuit, cette première instruction utilisant l'identifiant logique de cet objet.

Le code de l'application logicielle DesktopApp est donné aux lignes B21 à B31 de **l'annexe B**. Ce code comporte en particulier une ligne B23 utilisant l'identifiant logique "myCalculator" du programme informatique définie précédemment en référence à la figure 1.

Afin de pouvoir utiliser cet identifiant logique, et pour assurer une compatibilité avec la norme Java Card 2.2, l'équipement informatique terminal 100 comporte des moyens d'obtention, à partir de cet identifiant logique, en coopération avec les moyens d'entrée-sortie E/S, d'une deuxième référence locale. Cette deuxième référence locale est obtenue par la carte à microcircuit 10 à partir d'une première référence de l'objet informatique locale à la carte à microcircuit.

Dans le mode de réalisation décrit ici, ces moyens d'obtention sont réalisés par un programme CardNaming.lookup mémorisé sur le disque dur DISK, et dont le code source est donné aux lignes B12 à B20 de l'annexe B.

Dans le mode de réalisation décrit ici, les moyens d'obtention obtiennent tout d'abord l'identifiant AID de l'applet CalculatorApplet comportant l'objet informatique :

$$\text{(B14) : byte[ ]AID= CardNaming.cardManagerLookup(``myCalculator'');}$$

Dans l'exemple décrit ici, la méthode CardNaming.cardManagerLookup construit une première commande APDU contenant l'identifiant logique myCalculator et envoie cette commande APDU à la carte.

La carte retourne en réponse l'identifiant AID correspondant, soit la valeur A000000000H.

Cette première commande APDU provoque l'exécution sur la carte de l'instruction Lookup_AID de l'application CardManager qui obtient, à partir du fichier 20, la valeur de l'AID associée à l'identifiant logique myCalculator.

De façon connue, la première commande APDU est envoyée (après l'envoi d'une commande APDU de sélection de l'application CardManager, conformément à la norme ISO7816) par la méthode CardNaming.cardManagerLookup en utilisant la classe CardService prédéfinie par le consortium OCF (Open Card Framework) permettant d'envoyer des APDU à une carte. La syntaxe de cette commande APDU est donnée à l'**annexe C**.

Dans un deuxième temps, le programme CardNaming.appletLookup envoie une deuxième commande APDU avec deux paramètres d'entrée, à savoir l'identifiant AID (AOOOOOOOOOH) de l'applet obtenu précédemment et l'identifiant logique myCalculator de l'objet informatique de la carte.

Le programme CardNaming.appletLookup obtient en retour la deuxième référence locale temporaire K(0060H)=0460h obtenue par cryptage à partir de la première référence locale 0060H de cet objet sur la carte à microcircuit.

$$\text{(B15) byte[]ref= CardNaming.appletLookup(AID, ``myCalculator'');}$$

Cette deuxième commande APDU, dont la syntaxe est donnée à l'**annexe D**, provoque l'exécution sur la carte de l'instruction lookup_reference de l'application CardManager qui obtient, à partir du fichier 20, la première référence locale 0060H associée à l'identifiant logique myCalculator, puis calcule la deuxième référence locale 0460h.

L'équipement informatique terminal 100 comporte en outre des moyens de traduction de la première instruction en au moins une deuxième instruction pouvant être exécutée sur ladite carte, cette deuxième instruction utilisant ladite au moins une deuxième référence locale.

Ainsi par exemple, lorsque l'application logicielle DesktopApp désire modifier le contenu de la variable de la carte à microcircuit 10 dont l'identifiant logique est "date" avec la valeur "01/01/2002", les moyens de traduction génèrent une deuxième instruction, sous la forme d'une commande Put_data APDU, dont la syntaxe est donnée à l'**annexe E**. Cette instruction utilise la première référence locale 0050H de cet objet.

Dans le mode de réalisation décrit ici, les moyens de traduction sont constitués par un objet proxy créé à partir de la deuxième référence locale de l'objet obtenue précédemment (0460H). Dans ce mode de réalisation, l'objet proxy est une instance de la classe Proxy connue de l'homme du métier, et définie par Java 2™ platform, Standard Edition V1.3.

Conformément au standard Java 2™ platform, Standard Edition V1.3, on construit une classe CardHandler qui comporte une méthode invoke permettant la traduction des appels de méthode en coopération avec l'objet proxy.

La méthode invoke utilise la classe CardService définie par le consortium OCF (Open Card Framework). Le pseudo code de la classe CardHandler est donné aux lignes B1 à B11 de l'annexe B.

Dans l'exemple décrit ici, l'objet proxy est construit (lignes B16 et B17) et retourné (ligne B18) par la méthode CardNaming.lookup.

Ainsi, après l'exécution de l'instruction de la ligne B23 de l'annexe B, un objet calculator est créé dans le terminal, cet objet permettant la traduction des instructions utilisant l'objet informatique de la carte dont la référence logique est « myCalculator ».

La deuxième référence ref, locale à la carte, de cet objet calculator de traduction est mémorisée par le constructeur de la classe CardHandler décrite ci-dessus (ligne B4, annexe B).

L'objet de traduction calculator peut ensuite être utilisé dans un programme du terminal pour exécuter des méthodes de l'objet de la carte à microcircuit dont la référence logique est « myCalculator ».

Le développeur d'un tel programme peut par exemple écrire la ligne B24 de l'annexe B pour exécuter, sur la carte à microcircuit, l'addition des nombres 5 et 6.

A l'exécution de l'instruction de la ligne B24, la méthode Invoke de l'objet CardHandler décrite précédemment, créé et envoie la commande APDU Invoke conformément à la norme Java 2.2. La syntaxe de cette commande est donnée à l'**annexe G**.

Préalablement, l'applet CalculatorApplet a été sélectionnée au moment de l'exécution de la ligne B15.

Conformément à la norme Java Card 2.2, l'instruction invoke ainsi communiquée à l'applet CalculatorApplet au moyen de cette commande APDU déclenche l'exécution de la méthode add avec les paramètres 5 et 6.

La présente invention permet en outre, à une application logicielle s'exécutant sur un système tiers d'accéder à un objet informatique de la carte à microcircuit en utilisant son identifiant logique, lorsque la carte est insérée dans un terminal relié à ce système tiers par un réseau de télécommunications.

A cette fin, et dans un mode préféré de réalisation, l'équipement informatique terminal 100 comporte des moyens de publication dans un registre "Standard RMI Registry" d'une mémoire volatile RAM de ce terminal, d'un objet tampon remoteCalculator, présentant une interface identique à celle de l'objet informatique de la carte à microcircuit, et permettant à une application informatique s'exécutant sur un système tiers, d'utiliser cet objet informatique.

Pour cela, un objet intermédiaire calculator_invoker est tout d'abord créé (ligne B25, annexe B) à partir de l'objet de traduction calculator décrit précédemment.

L'objet calculator_invoker appartient à la classe InvokerImpl, cette classe étant elle-même une classe UnicastRemoteObject connue de l'homme du métier et implémentant les mécanismes RMI de Java SE 1.3. Le code de la classe InvokerImpl est donné à l'annexe F, lignes F3 à F8.

De façon connue, l'objet intermédaire calculator_invoker comporte l'objet de traduction calculator et une méthode invokeMethod, cette méthode invokeMethod implémentant un mécanisme de traduction des appels aux méthodes de l'objet calculator, en utilisant le mécanisme de réflectivité du langage Java (ligne F7).

L'objet calculator_invoker créé à la ligne B25 est un objet RMI mémorisé dans le registre du terminal "Standard RMI Registry", mais il ne possède pas les méthodes des objets informatiques présents sur la carte à microcircuit. En particulier, il ne possède pas la méthode add.

Pour permettre l'utilisation de cette méthode par une application s'exécutant sur un système tiers, on mémorise dans le registre du terminal "Standard RMI Registry" l'objet tampon remoteCalculator (lignes B27 à B29) qui implémente les méthodes de l'objet de la carte dont l'identifiant logique est "myCalculator", cet objet remoteCalculator étant identifié également par l'identifiant logique "myCalculator" (ligne B29). L'objet remoteCalculator contient en outre l'identifiant logique et les moyens d'appel RMI à l'objet intermédaire calculator_invoker, comme on peut le voir dans le code de la classe InvokerHandler ligne F9 à F15. L'objet tampon remoteCalculator est adapté, en faisant appel à l'objet calculator_invoker à traduire une instruction s'exécutant sur le système tiers et utilisant ledit identifiant logique, en au moins une deuxième instruction pouvant être exécutée sur ladite carte et utilisant la deuxième référence locale (0460H).

Deux objets sont ainsi enregistrés dans le registre du terminal "Standard RMI registry", à savoir d'une part l'objet intermédiaire calculator_invoker sous l'identifiant "myCalculator_Invoker" (ligne B26) et l'objet tampon remoteCalculator avec l'identifiant logique "myCalculator" (ligne B29).

Ainsi, lorsqu'une application logicielle du système tiers exécute l'instruction suivante :

Calculator calculator_tiers = (Calculator)Naming.lookup("myCalculator"),

la méthode Naming.lookup de Java2 SE lit, dans le registre "Standard RMI registry" du système terminal, l'objet tampon remoteCalculator, le reconstruit dans le système tiers, et l'affecte à l'objet calculator_tiers.

L'application logicielle du système tiers peut ensuite utiliser l'objet calculator_tiers pour accéder à l'objet correspondant de la carte à microcircuit 10 via l'objet intermédiaire calculator_invoker du système terminal.

Ainsi, les objets informatiques de la carte à microcircuit 10 peuvent être utilisés sur un système informatique tiers connecté en réseau au système informatique terminal 100.

Dans le mode préféré de réalisation décrit ici, le système terminal fournit également les moyens de publication décrits précédemment pour la publication de l'objet calculator sous forme d'une classe Java BindingService dont les principales instructions, nécessaires à la compréhension, sont données à l'annexe F, lignes F16 à F30.

Ces moyens de publication BindingService sont en particulier adaptés à obtenir et publier dans le registre "standard RMI Registry" du terminal l'ensemble des objets tampons des objets informatiques publiés par la carte à microcircuit.

Dans le mode préféré de réalisation décrit ici, les moyens de publication BindingService utilisent à cette fin la commande APDU get_bound_objects_APDU dont la syntaxe est donnée à l'annexe G.

ANNEXES

### ANNEXE A

```
A1      public interface Calculator extends Remote {
A2          short add (short a, short b) throws RemoteException ;
A3      }

A10     public class CalculatorImpl extends CardRemoteObject implements Calculator {
A11         public CalculatorImpl ( ) { super ( ); }
A12         short add(short a, short b) throws RemoteException {
A13             return (short) (a+b) ;
A14         }
A15     }

A20     public class CalculatorApplet extends Applet {
A21         private Dispatcher dispatcher ;
A22         private final static byte CALCULATOR = { (byte)m, (byte)y, (byte)C, (byte)a, (byte)l
A23             , (byte)c, (byte)u, (byte)l, (byte)a, (byte)t, (byte)o, (byte)r};

A30         private CalculatorApplet{
A31         Calculator calculator = new CalculatorImpl ( );
A32         OCSRMIService rmi = new OCSRMIService (calculator) ;
A33         RMIRegistry.bind (CALCULATOR, (short) 0, (byte) CALCULATOR.length,
A34             calculator);
A35         dispatcher = new Dispatcher(1);
A36         dispatcher.addService(rmi, Dispatcher.PROCESS_COMMAND);
A37         }

A40         public static void install(byte[ ] buffer, short offset, byte length) {
A41             (new CalculatorApplet( )).register( );
A42         };

A50         public void process (APDU apdu) {install(byte[ ] buffer, short offset, byte length) {
A51         dispatcher.process (apdu);
A52         }
A53     }
```

### ANNEXE B

```
B1      class CardHandler implements Invocation Handler {
B2          private byte [ ] ref ;
```

(suite)

```
B3      CardHandler(byte[ ] ref) {
B4          this.ref = ref;
B5      }


B6      public Object invoke(Objet proxy, Method method, Object[ ] params) {
B7          /* Code de traduction de l'appel à la méthode method */
B8          /* Construction d'une APDU, en utilisant ref pour lancer l'exécution de la méthode method sur la carte */
B9          /* Envoi de l'APDU à la carte et récupération de la réponse retournée par la méthode */
B10     }
B11 }


B12 class CardNaming {
B13     public static Remote lookup(String name) {
B14         byte aid[] = CardNaming.cardManagerLookup (name) ;
B15         byte ref[] = CardNaming.appletLookup(aid, name) ;
B16         Cardhandler ch = new Cardhandler(K(ref)) ;
B17         Remote proxy = (Remote) Proxy.newProxyInstance(..., ch, ...);
B18         return proxy ;
B19     }
B20 }


B21 public class DesktopApp {
B22     void main (String [ ] args) {
B23         Calculator calculator = (Calculator) CardNaming.lookup ("myCalculator");
B24         short result = calculator.add((short) 5, (short) 6);
B25         InvokerImpl calculator_invoker = new InvokerImpl(calculator);
B26         Naming.bind("myCalculator_invoker",calculator_invoker);
B27         InvokerHandler handler = new InvokerHandler("myCalculator_invoker");
B28         Remote remoteCalculator = Proxy.newProxyInstance(..., handler,...);
B29         Naming.bind("myCalculator", remoteCalculator);
B30     }
B31 }
```

**ANNEXE C**

| AID Lookup_APDU | | |
|---|---|---|
| Nom du champs (ISO 7816) | Valeur en hexadécimal | Description du contenu du champs |
| CLA | 80h | Classe d'appel propriétaire |
| INS | 42h | Instruction lookup_AID |
| P1 | 00h | Pas de paramètre |
| P2 | 00h | Pas de paramètre |
| Lc | 0Ch | Longueur de l'identifiant logique myCalculator |
| Data Field | 6D7943616C63756C61746F72h | Identifiant logique myCalculator codé en format UTF-8 |
| Le | 00h | Taille attendue de la réponse inconnue |

**ANNEXE D**

| Référence Lookup_APDU | | |
|---|---|---|
| Nom du champs (ISO 7816) | Valeur en hexadécimal | Description du contenu du champs |
| CLA | 80h | Classe d'appel propriétaire |
| INS | 40h | Instruction lookup_référence |
| P1 | 00h | Pas de paramètre |
| P2 | 10h | Paramètre spécial |
| Lc | 0Ch | Longueur de l'identifiant logique |
| Data Field | 6D7943616C63756C61746F72h | Identifiant logique codé en format UTF-8 |
| Le | 00h | Taille attendue de la réponse inconnue |

**ANNEXE E**

| Put_data APDU | | |
|---|---|---|
| Nom du champs (ISO 7816) | Valeur en hexadécimal | Description du contenu du champs |
| CLA | 80h | Classe d'appel propriétaire |
| INS | Dah | Instruction Put_data |
| P1 | 00h | premier octet du tag date |
| P2 | 50h | deuxième octet du tag date |
| Lc | 04h | Longueur de la date 01/01/2002 |
| Data | 01012002h | Date 01/01/2002 |

**ANNEXE F**

```
F1      public interface Invoker extends Remote {
F2          public Object invoke(OMethod method, Object[] args); }

F3      public class InvokerImpl extends UnicastRemoteObject implements Invoker {
F4          private Remote cardObject;
F5          InvokerImpl(Remote cardObject) {Super(); this.cardObject = cardObject;}
F6          public Object invokeMethod(String method, Object[] args) {
F7              /** use Reflectivity **/ }
F8      }

F9      public class InvokerHandler implements InvocationHandler, Serializable {
F10         private String invokerName;
F11         InvokerHandler(String invokerName) {this.invokerName = invokerName;}
F12         public Object invoke(Object proxy, Method method, Object[] args) {
F13             Invoker invoker = Naming.lookup(invokerName);
F14             return invoker.invokeMethod(getString(method), args); }
F15     }

F16     public class BindingService {
F17         public static main(String[] args) {
F18             String registryURL = args[1];
F19             Iterator iterator = getBoundObjects();
```

**EP 1 559 003 B1**

(suite)

```
F20                 while (iterator.hasNext()) {
F21                     String name = (String)iterator.next();
F22                     Remote cardObject = CardNaming.lookup(name);
F23                     InvokerImpl invoker = new InvokerImpl(cardObject);
F24                     String invokerName = registryURL + name + "_Invoker";
F25                     Naming.bind(invokerName, invoker);
F26                     InvokerHandler handler = new InvokerHandler(invokerName);
F27                     Remote remoteObject = Proxy.nexProxyInstance(..., handler,...);
F28                     Naming.bind(registryURL + name, remoteObject);
F29                 }
F30             }
F31         }
```

## ANNEXE G

| Invoke APDU | | |
|---|---|---|
| Nom du champs (ISO 7816) | Valeur en hexadécimal | Description du contenu du champs |
| CLA | 80h | Classe d'appel propriétaire |
| INS | 38h | Instruction Invoke |
| P1 | 02h | premier octet de version Java Card |
| P2 | 02h | deuxième octet de version Java Card |
| Lc | 08h | Longueur des données |
| Data | 0460 A7F6 0005 0006h | Données : référence (2 octets), méthode add (2 octets), paramètre "5" (2 octets) et paramètre "6" (2 octets). |

## ANNEXE H

| get_bound_objects APDU | | |
|---|---|---|
| Nom du champs (ISO 7816) | Valeur en hexadécimal | Description du contenu du champs |
| CLA | 80h | Classe d'appel propriétaire |
| INS | 44h | Instruction get_bound_objects |
| P1 | 00h | Pas de paramètre |
| P2 | 00h | Pas de paramètre |
| Le | 00h | Taille attendue de la réponse |

## Revendications

1. Carte à microcircuit (10) comportant au moins un objet informatique **caractérisée en ce qu'**elle comporte :

- un registre (20) comportant un identifiant logique (myCalculator) dudit objet et au moins une première référence (0060H) dudit objet informatique locale à ladite carte ; et
- des moyens (CardManager) adaptés à communiquer à un terminal (100), sur réception d'un premier message (lookup_APDU) provenant du terminal comportant ledit identifiant logique (myCalculator), au moins une deuxième référence locale (K(0060H)= 0460H) dudit objet informatique obtenue à partir de ladite au moins une première référence locale (0060H) dudit objet informatique,

ladite deuxième référence locale (0460H) dudit objet informatique étant temporaire et étant obtenue par cryptage de la première référence locale (0060H) dudit objet informatique en utilisant une clef (KEY) de cryptage de la carte à microcircuit.

2. Carte à microcircuit selon la revendication 1, **caractérisée en ce qu'**elle comporte en outre des moyens de publication (bind) dudit identifiant logique (myCalculator) et de ladite au moins une première référence locale (0060H) dans ledit registre (20) de la carte.

3. Carte à microcircuit selon la revendication 1 ou 2 dans laquelle ledit objet informatique est un objet de type Java Card appartenant à une applet Java Card (CalculatorApplet), la carte étant **caractérisée en ce que** ladite deuxième référence locale (0460H) dudit objet informatique est conforme à la norme Java Card 2.2.

4. Carte à microcircuit selon les revendications 2 et 3, **caractérisée en ce que** ladite publication est effectuée à l'initialisation de ladite applet (CalculatorApplet).

5. Carte à microcircuit selon la revendication 3 ou 4, **caractérisée en ce que** les moyens de communication (card manager) sont adaptés à communiquer un identifiant (AOOOOOOOOOH) de ladite applet sur réception dudit premier message (lookup_APDU).

6. Carte à microcircuit selon l'une quelconque des revendications 1 à 5, **caractérisée en ce que** ledit objet informatique est un programme informatique (myCalculator), une variable (date) ou un fichier informatique (CARD_HOLDER).

7. Carte à microcircuit selon l'une quelconque des revendications 1 à 6, **caractérisée en ce que** lesdits moyens de communication communiquent, sur réception d'un deuxième message (get_bound_objects_APDU) l'ensemble des identifiants logiques compris dans ledit registre (20).

8. Equipement informatique (terminal) de type terminal (100) comportant des moyens (CPU, ROM, RAM) adaptés à mettre en oeuvre une application logicielle (DesktopApp) comportant au moins une première instruction pour utiliser au moins un objet informatique dans une carte à microcircuit (10), **caractérisé en ce que** ladite au moins une première instruction utilisant un identifiant logique (myCalculator) dudit objet informatique, ledit équipement informatique comporte:

   - des moyens d'obtention (CardNaming.lookup), à partir dudit identifiant logique (myCalculator), d'au moins une deuxième référence locale (K(0060H) = 0460H) dudit objet informatique par envoi d'un message comportant ledit identifiant logique (myCalculator) à ladite carte, ladite au moins deuxième référence locale (0460H) étant obtenue par la carte à microcircuit à partir d'une première référence (0060H) dudit objet informatique locale à ladite carte, ladite première référence locale (0060H) et ledit identifiant logique (myCalculator) étant dans un registre (20) de ladite carte (10), ladite deuxième référence locale (0460H) dudit objet informatique étant temporaire et étant obtenue par cryptage de la première référence locale (0060H) dudit objet informatique en utilisant une clef (KEY) de cryptage de la carte à microcircuit;
   - des moyens de traduction (proxy, invoke) de ladite au moins une première instruction en au moins une deuxième instruction pouvant être exécutée sur ladite carte, ladite au moins une deuxième instruction utilisant ladite au moins une deuxième référence locale (0460H) dudit objet informatique; et
   - des moyens de communication adaptés à communiquer ladite au moins une deuxième instruction à ladite carte en vue de ladite utilisation.

9. Equipement informatique selon la revendication 8 dans lequel ledit objet informatique est un objet de type Java Card appartenant à une applet Java Card (CalculatorApplet) de la carte à microcircuit, l'équipement informatique étant **caractérisé en ce que** les moyens d'obtention (CardNaming.lookup) sont adaptés à obtenir ladite au moins deuxième référence dudit objet informatique (0460H) conforme à la norme Java Card 2.2.

10. Equipement informatique selon la revendication 8, **caractérisé en ce que** les moyens d'obtention (CardNamingAPI lookup) sont adaptés à obtenir un identifiant (AOOOOOOOOOH) de ladite applet (CalculatorApplet).

11. Equipement informatique selon l'une quelconque des revendications 8 à 10, **caractérisé en ce que** ledit objet informatique est un programme informatique (myCalculator), une variable (date) ou un fichier informatique (CARD_HOLDER).

**12.** Equipement informatique selon l'une quelconque des revendications 8 à 11, **caractérisé en ce qu'**il comporte en outre des moyens de publication (BindingService), dans un registre dudit système informatique terminal (standard RMI Registry), d'un objet tampon (remoteCalculator) comportant une interface identique à celle de l'objet informatique de la carte, cet objet tampon étant adapté à traduire (invokeMethod) une instruction s'exécutant sur un système tiers et utilisant ledit identifiant logique, en au moins une deuxième instruction pouvant être exécutée sur ladite carte et utilisant ladite deuxième référence locale (0460H) dudit objet informatique.

**13.** Equipement informatique selon la revendication 12, **caractérisé en ce que** les moyens de publication (BindingService) sont adaptés à obtenir et publier dans le registre dudit système informatique terminal (standard RMI Registry), l'ensemble des objets tampons des objets informatiques publiés par ladite carte.


**Patentansprüche**

**1.** Mikroschaltungskarte (10) mit mindestens einem Computerobjekt, **dadurch gekennzeichnet, dass** sie umfasst:

- ein Register (20), das eine logische Kennung (myCalculator) des Objekts und mindestens eine erste lokale Referenz (0060H) des Computerobjekts auf die Karte umfasst; und
- Mittel (CardManager), die geeignet sind, an ein Endgerät (100) beim Empfangen einer ersten von dem Endgerät kommenden Nachricht (lookup_APDU), welche die logische Kennung (myCalculator) umfasst, mindestens eine zweite lokale Referenz (K(0060H)= 0460H) des Computerobjekts zu kommunizieren, die ausgehend von mindestens einer ersten lokalen Referenz (0060H) des Computerobjekts erhalten wird, wobei die zweite lokale Referenz (0460H) des Computerobjekts temporär ist und durch Verschlüsseln der ersten lokalen Referenz (0060H) des Computerobjekts unter Verwendung eines Verschlüsselungsschlüssels (KEY) der Mikroschaltungskarte erhalten wird.

**2.** Mikroschaltungskarte nach Anspruch 1, **dadurch gekennzeichnet, dass** sie ferner Mittel zur Veröffentlichung (bind) der logischen Kennung (myCalculator) und der mindestens einen ersten lokalen Referenz (0060H) in dem Register (20) der Karte umfasst.

**3.** Mikroschaltungskarte nach Anspruch 1 oder 2, bei der das Computerobjekt ein Objekt vom Typ Java Card ist, das zu einer Java Card Applet (CalculatorApplet) gehört, wobei die Karte **dadurch gekennzeichnet ist, dass** die zweite lokale Referenz (0460H) des Computerobjekts konform zur Norm Java Card 2.2 ist.

**4.** Mikroschaltungskarte nach den Ansprüchen 2 und 3, **dadurch gekennzeichnet, dass** die Veröffentlichung bei der Initialisierung des Applets (CalculatorApplet) durchgeführt wird.

**5.** Mikroschaltungskarte nach Anspruch 3 oder 4, **dadurch gekennzeichnet, dass** die Kommunikationsmittel (CardManager) geeignet sind, beim Empfangen der ersten Nachricht (lookup_APDU) eine Kennung (AOOOOOOOOOH) des Applets zu kommunizieren.

**6.** Mikroschaltungskarte nach einem der Ansprüche 1 bis 5, **dadurch gekennzeichnet, dass** das Computerobjekt ein Computerprogramm (myCalculator), eine Variable (Datum) oder eine Computerdatei (CARD_HOLDER) ist.

**7.** Mikroschaltungskarte nach einem der Ansprüche 1 bis 6, **dadurch gekennzeichnet, dass** die Kommunikationsmittel beim Empfangen einer zweiten Nachricht (get_bound_objects_APDU) alle in dem Register (20) enthaltenen logischen Kennungen kommunizieren.

**8.** Computereinrichtung (Endgerät) von der Art eines Endgeräts (100) mit Mitteln (CPU, ROM, RAM), die geeignet sind, eine Softwareanwendung (DesktopApp) auszuführen, die mindestens eine erste Anweisung umfasst, um mindestens ein Computerobjekt in einer Mikroschaltungskarte (10) zu verwenden, **dadurch gekennzeichnet, dass** die mindestens eine erste Anweisung eine logische Kennung (myCalculator) des Computerobjekts verwendet, wobei die Computereinrichtung umfasst:

- Mittel zum Erhalten (CardNaming.lookup), ausgehend von der logischen Kennung (myCalculator), mindestens einer zweiten logischen Referenz (K(0060H) = 0460H) des Computerobjekts durch Senden einer Nachricht mit der logischen Kennung (myCalculator) an die Karte, wobei die mindestens zweite lokale Referenz (0460H) von der Mikroschaltungskarte ausgehend von einer ersten lokalen Referenz (0060H) des Computerobjekts auf die Karte erhalten wird, wobei die erste lokale Referenz (0060H) und die logische Kennung (myCalculator) in einem Register (20) der Karte (10) sind, wobei die zweite lokale Referenz (0460H) des Computerobjekts temporär ist und durch Verschlüsseln der ersten lokalen Referenz (0060H) des Computerobjekts unter Verwendung eines Verschlüsselungsschlüssels (KEY) der Mikroschaltungskarte erhalten wird;

- Mittel zur Übersetzung (proxy, invoke) der mindestens einen ersten Anweisung in mindestens eine zweite Anweisung, die auf der Karte ausgeführt werden kann, wobei die mindestens eine zweite Anweisung die mindestens eine zweite lokale Referenz (0460H) des Computerobjekts verwendet; und

- Kommunikationsmittel, die geeignet sind, die mindestens eine zweite Anweisung im Hinblick auf die Verwendung an die Karte zu kommunizieren.

9. Computereinrichtung nach Anspruch 8, bei der das Computerobjekt ein Objekt vom Typ Java Card ist, das zu einer Java Card Applet (CalculatorApplet) der Mikroschaltungskarte gehört, wobei die Computereinrichtung **dadurch gekennzeichnet ist, dass** die Mittel zum Erhalten (CardNaming.lookup) geeignet sind, die mindestens zweite Referenz des Computerobjekts (0460H), die zur Norm Java Card 2.2 konform ist, zu erhalten.

10. Computereinrichtung nach Anspruch 8, **dadurch gekennzeichnet, dass** die Mittel zum Erhalten (CardNamingAPI.lookup) geeignet sind, eine Kennung (AOOOOOOOOOH) des Applets (CalculatorApplet) zu erhalten.

11. Computereinrichtung nach einem der Ansprüche 8 bis 10, **dadurch gekennzeichnet, dass** das Computerobjekt ein Computerprogramm (myCalculator), eine Variable (Datum) oder eine Computerdatei (CARD_HOLDER) ist.

12. Computereinrichtung nach einem der Ansprüche 8 bis 11, **dadurch gekennzeichnet, dass** sie ferner Mittel zur Veröffentlichung (BindingService), in einem Register des Endgerätecomputersystems (standard RMI Registry), eines Pufferobjekts (remoteCalculator) umfasst, das eine identische Schnittstelle wie die des Computerobjekts der Karte umfasst, wobei dieses Pufferobjekt geeignet ist, eine Anweisung, die auf einem Drittsystem ausgeführt wird und die logisch Kennung verwendet, in mindestens eine zweite Anweisung zu übersetzen (invokeMethod), die auf der Karte ausgeführt werden kann und die zweite lokale Referenz (0460H) des Computerobjekts verwendet.

13. Computereinrichtung nach Anspruch 12, **dadurch gekennzeichnet, dass** die Mittel zur Veröffentlichung (BindingService) geeignet sind, alle von der Karte veröffentlichten Pufferobjekte der Computerobjekte zu erhalten und in dem Register des Endgeräteinformationssystems (standard RMI Registry) zu veröffentlichen.

**Claims**

1. Microcircuit card (10) containing one or more computer objects, **characterized in that** it includes:

   - a register (20) containing a logical identifier (myCalculator) of said object and one or more first references (0060H) of said computer object local to said card; and
   - means (CardManager) adapted, on reception of a first message (lookup_APDU) from the terminal including said logical identifier (myCalculator), to communicate to a terminal (100) one or more second local references (K(0060H)= 0460H) of said computer object obtained from said one or more first local references (0060H) of said computer object.

   said second local reference (0460H) of said computer object being temporary and being obtained by encrypting the first local reference (0060H) of said computer object using an encryption key (KEY) of the microcircuit card.

2. Microcircuit card according to Claim 1, **characterized in that** it further includes means (bind) for publication of said logical identifier (myCalculator) and of said one or more first local references (0060H) in said register (20) of the card.

3. Microcircuit card according to Claim 1 or claim 2, wherein said computer object is a Java Card type object belonging to a Java Card applet (CalculatorApplet), the card being **characterized in that** said second local reference (0460H) of said computer object conforms to the Java Card 2.2 standard.

4. Microcircuit card according to Claims 2 and 3, **characterized in that** said publication is effected at the initialization of said applet (CalculatorApplet).

5. Microcircuit card according to Claim 3 or Claim 4, **characterized in that** the communication means (card manager) are adapted to communicate an identifier (AOOOOOOOOOH) of said applet on reception of said first message (lookup_APDU).

6. Microcircuit card according to any one of Claims 1 to 5, **characterized in that** said computer object is a computer program (myCalculator), a variable (date) or a computer file (CARD_HOLDER).

7. Microcircuit card according to any one of Claims 1 to 6, **characterized in that**, on reception of a second message (get_bound_objects_APDU), said communication means communicate all the logical identifiers contained in said register (20).

8. Terminal type computer (terminal) equipment (100) including means (CPU, ROM, RAM) adapted to execute a software application (DesktopApp) including one or more first instructions for using one or more computer objects in a microcircuit card (10), which equipment is **characterized in that** said one or more first instructions uses a logical identifier (myCalculator) of said computer object and the equipment includes:

- means (CardNaming.lookup) for obtaining, from said logical identifier (myCalculator), one or more second local references (K(0060H) = 0460H) of said computer object by sending a message including said logic identifier (myCalculator) to said card, said one or more second local references (0460H) being obtained by the microcircuit card from a first reference (0060H) of said computer object local to said card, said first local reference (0060H) and said logic identifier (myCalculator) being in a register (20) of said card (10), said second local reference (0460H) of said data computer being temporary and being obtained by encrypting the first local reference (0060H) of said computer object using an encryption key (KEY) of the microcircuit card;,
- means (proxy, invoke) for translating said one or more first instructions into one or more second instructions that can be executed on said card, said one or more second instructions using said one or more second local references (0460H) of said computer object, and
- communication means adapted to communicate said one or more second instructions to said card for said use.

9. Computer equipment according to Claim 8, wherein said computer object is a Java Card type object belonging to a Java Card applet (CalculatorApplet) of the microcircuit card, which computer equipment is **characterized in that** the obtaining means (CardNaming.lookup) are adapted to obtain said one or more second references of said computer object (0460H) conforming to the Java Card 2.2 standard.

10. Computer equipment according to Claim 8, **characterized in that** the obtaining means (CardNamingAPI lookup) are adapted to obtain an identifier (A000000000H) of said applet (CalculatorApplet).

11. Computer equipment according to any one of Claims 8 to 10, **characterized in that** said computer object is a computer program (myCalculator), a variable (date) or a computer file (CARD_HOLDER).

12. Computer equipment according to any one of Claims 8 to 11, **characterized in that** it further includes means (BindingService) for publishing, in a register (standard RMI Registry) of said computer terminal system, a buffer object (remoteCalculator) including an interface identical to that of the computer object of the card, that buffer object being adapted to translate (invokeMethod) an instruction executing on a third party system and using said logical identifier into one or more second instructions that can be executed on said card and use said second local reference (0460H) of said computer object.

13. Computer equipment according to Claim 12, **characterized in that** the publication means (BindingService) are adapted to obtain and to publish in the register (standard RMI Registry) of said computer terminal system all the buffer objects of the computer objects published by said card.

**Binding_API**

**Card Manager**

**K**

ROM

EEPROM

CPU

RAM

Lookup_APDU
(identifiant
logique)

E/S

AID, deuxième
référence locale

Fichier:3F00H

KEY

CalculatorApplet: A000000000H

Variable: 0050H

| identifiant logique | Première référence locale | |
|---|---|---|
| myCalculator | AID : A000000000H | |
| | ref :0060H | |
| CARD_HOLDER | 3F00H | |
| date | 0050H | |

20

*FIGURE 1*

10

DISK

DesktopApp

CardNaming.lookup

Binding service

CPU

E/S

Lookup_APDU
(identifiant logique)

AID, deuxième référence locale

110

Standard RMI
Registry

RAM

100

*FIGURE 2*

17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0964370 A